# EUROPEAN PATENT APPLICATION

(11) **EP 4 212 340 A1**
(43) Date of publication of application: **19.07.2023**
(21) Application number: 22217105.0
(22) Date of filing: 29.12.2022
(51) Int. Cl.: B33Y 40/00, B29C 64/371

(54) **GAS FLOW SYSTEM FOR LASER POWDER BED FUSION**

(30) Priority: 17.01.2022 US 202217648133
(71) Applicant: Honeywell International Inc., Charlotte, NC 28202 (US)
(72) Inventor: KARR, Austin, Charlotte, 28202 (US); LASTRE, Henry, Charlotte, 28202 (US); SUTTER, Clayton, Charlotte, 28202 (US)
(74) Representative: Lucas, Peter Lawrence

(57) **Abstract**

A system for additive manufacture uses a powder bed with powder distributed on a build surface. A nozzle directs and controls a flow stream of gas over the powder bed. The nozzle includes a peripheral duct wall defining a channel with an inlet and an outlet. The channel directs the flow stream and diverges from the inlet to the outlet of the nozzle. Vanes are distributed across the channel as symmetric airfoils to reduce turbulence of the flow stream. Guides extend between the vanes and are disposed at an angle selected to direct the gas over the powder bed without blowing the deposited powder off the build surface.

## Description

### TECHNICAL FIELD

The present invention generally relates to the manufacture and repair of products by additive manufacturing processes, and more particularly relates to systems for controlling gas flow in powder bed additive manufacturing machines, such as those using laser powder bed fusion, to provide a desirable environment at the build area and without displacing powder from the bed.

### BACKGROUND

Various types of articles may be created or repaired using additive manufacturing processes. Additive manufacturing includes processes such as those that create a component or item by the successive addition of particles, layers or other groupings of a material onto one another. The article is generally built or repaired using a computer controlled machine based on a digital representation, and includes processes such as 3-D printing. A variety of different additive manufacturing processes are used for part creation, such as processes that involve powder bed fusion, laser metal deposition, material jetting, or other methods.

Conducting certain manufacturing operations in an inert gas environment is preferable. Laser powder bed fusion is one example where the introduction of a gas to the build area is desirable to displace air. The powder bed is deposited into the build area by a powder deposition system, which applies the material used to print to the product in a powder form. A laser is used to selectively fuse the deposited material to the part being built or repaired. The introduced inert gas may displace reactive elements in air and/or may improve product attributes such as the porosity and the strength of the product being built by the fusion process.

It is desirable to introduce gas into an additive manufacturing build area containing powder to create a desirable environment in a controlled manner. Furthermore, other desirable features and characteristics of the present invention will become apparent from the subsequent detailed description of the invention and the appended claims, taken in conjunction with the accompanying drawings and this background of the invention.

### BRIEF SUMMARY

This Brief Summary is provided to describe select concepts in a simplified form that are further described in the Detailed Description section hereof. This summary is not intended to identify key or essential features of the claimed subject matter, nor is it intended to be used as an aid in determining the scope of the claimed subject matter.

Systems are described herein for additive manufacturing using a powder bed with powder distributed on a build surface. A number of embodiments include a nozzle configured to direct a flow stream of a gas over the powder bed. The nozzle includes a perimeter wall that defines a channel with an inlet and an outlet. The channel controls the flow stream and the perimeter wall diverges from the inlet to the outlet. A number of vanes are distributed across the channel. The vanes are airfoils that reduce turbulence of the flow stream. A number of guides extend between adjacent vanes. Each guide is disposed at an angle selected to direct the flow stream over the powder bed without displacing the powder in the powder bed.

In a number of additional embodiments, a system for additive manufacturing uses a powder bed with powder distributed on a build surface. A recoater distributes the powder across the build surface to create the powder bed. An energy source directs energy onto the powder bed to fuse the powder together. A nozzle directs a flow stream of a gas over the powder bed in an area of the energy. The nozzle includes a perimeter wall that defines a channel with an inlet and an outlet. The channel controls the flow stream and the perimeter wall diverges from the inlet to the outlet. A number of vanes are distributed across the channel. The vanes are configured as symmetric airfoils that reduce turbulence of the flow stream. A number of guides extend between adjacent vanes. Each guide is disposed at an angle selected to direct the flow stream over the powder bed without blowing the powder off the build surface and for avoiding a short-feed of the recoater.

In a number of other embodiments, a system for additive manufacturing uses a powder bed with powder distributed on a build surface. The system includes a recoater to distribute the powder across the build surface to create the powder bed. A laser directs energy onto the powder bed to fuse the powder together. The laser interacts with the powder, which may result in an emission of particles above the powder bed. A nozzle directs a flow stream of a gas over the powder bed in an area of the laser. The nozzle includes a perimeter wall that defines a channel with an inlet and an outlet. The channel controls the flow stream and the perimeter wall diverges from the inlet to the outlet. The perimeter wall includes a top wall disposed at a first angle relative to horizontal. A number of vanes are distributed across the channel. The vanes are configured as symmetric airfoils that reduce turbulence of the flow stream over the powder bed. A number of guides extend between adjacent vanes. Each guide is disposed at a second angle relative to the horizontal. The second angle is tuned to direct the flow stream over the powder bed without creating gaps in the powder bed and to direct the particles away from the powder bed. The first angle is greater in magnitude than the second angle to reduce the flow stream from being directed at the powder bed.

### BRIEF DESCRIPTION OF THE DRAWINGS

The present invention will hereinafter be described in conjunction with the following drawing figures, wherein like numerals denote like elements, and wherein:
FIG. 1 is a schematic illustration of an additive manufacturing system in the process building up a product using laser powder bed fusion, according to an exemplary embodiment;
FIG. 2 is a face view of the outlet of a duct nozzle of the gas flow system of the additive manufacturing system of FIG. 1, according to an exemplary embodiment;
FIG. 3 is a sectional illustration of the nozzle of FIG. 2, taken generally along the line indicated by 3-3 in FIG. 2, according to an exemplary embodiment; and
FIG. 4 is a sectional illustration of the nozzle of FIG. 2, taken generally along the line indicated by 4-4 in FIG. 2, according to an exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

In the current description, additive manufacturing techniques such as laser powder bed fusion may be used to create or repair products in a controlled environment. An inert gas environment is provided through a system that leverages aerodynamic features to control the inert gas flow to achieve desirable results. The design minimizes turbulence while maintaining desired functionality of the gas flow system. Symmetric airfoil vanes control turbulence in the build chamber. Airflow features minimizes the risk of powder short-feeding, and as a result, throughput yield is increased. Short-feeding may otherwise result where powder is undesirably depleted from the build area by ineffectively controlled gas flow and turbulence.

In embodiments of the present disclosure as further described below, a system for additive manufacture using a powder bed with powder distributed on a build surface includes a nozzle configured to direct and control the flow of gas over the powder bed. The nozzle may include a peripheral duct wall defining a channel with an inlet and an outlet. The channel directs the flow. The duct wall may diverge from the inlet to the outlet of the duct wall to slow the velocity of the gas flow. A number of vanes are distributed across the channel and may be configured as symmetric airfoils to reduce turbulence of the flow. A number of guides extend between the vanes. Each guide is disposed at an angle tuned to direct the gas over the powder bed without blowing the deposited powder off the build surface.

In the work leading to the current application, it has been found that if not controlled, gas flow may entrain particles deposited in a powder bed within the build area. The entrained particles may themselves lead to increased separation of even more particles from the bed due to boundary layer incursions. The result may be a depleted zone in the powder bed where erosion causes a gap of powder coverage in the bed. When the depleted zone is created after a first pass of the material deposition system, the recoater may read the gap and apply more powder. This may lead to short-feeding, where the recoater runs out of powder loaded for the layer, and cannot completely fill the bed to the programmed level. Accordingly, the system provided herein controls the gas flow to avoid the creation of depleted zones and the resulting short-feed situation, while preserving the desirable functions of the gas flow stream.

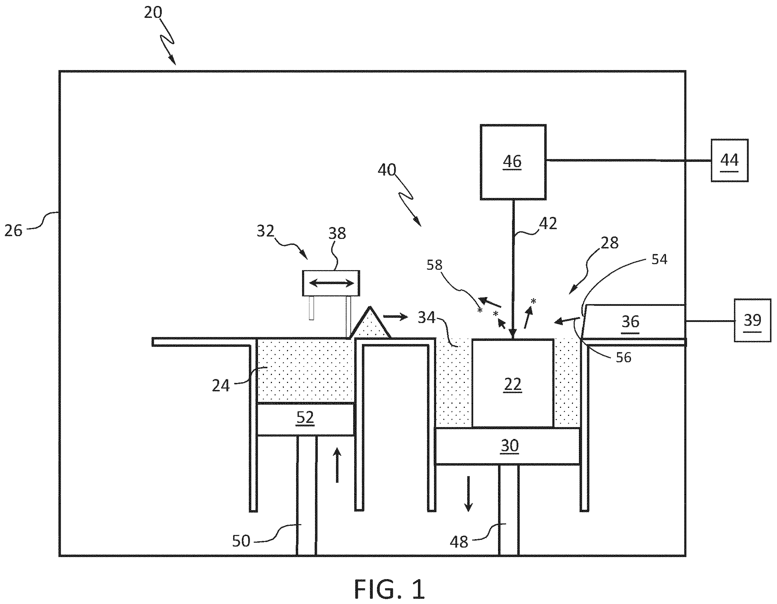

Referring to FIG. 1, illustrated is an example additive manufacturing system 20, in this case embodied as a laser powder bed fusion system and machine. In general, additive manufacture includes processes such as those that create a component or item by the successive addition of particles, layers or other groupings of a material onto one another. The article is generally built using computer control of the machine based on a digital representation, and includes processes such as 3-D printing. A variety of different additive manufacturing processes are available such as processes that involve powder bed fusion, laser metal deposition, material jetting, or other methods. The example additive manufacturing system 20 is carried out with an energy source to effect sintering. An objective is to create, modify or repair a product 22 in a build chamber enclosure 26. In particular, the product is built-up one layer at a time in a build area 28, such as on a build platform 30 that is raised and lowered by an actuator 48. The build chamber enclosure 26 defines the build chamber as a contained environment for processing the product 22. In a number of embodiments, a plural number of products 22 may be built in the same build cycle.

A material deposition system 32 moves the powder material 24 for creating the powder bed 34 to the build area 28. The material deposition system 32 generally includes a recoater 38 that applies the powder material 24 into the build area 28 on the build platform 30 in individual layers. The recoater 38 may include a scraper blade or blades. In other embodiments, a roller, a pneumatic conveyor, a hopper spreader, or other device that moves and evenly spreads the powder material 24 may be employed. A laser system 40 includes a beam deflection head 46 disposed within the build chamber enclosure 26 for selectively applying a laser beam 42 to the build area 28 to build the product 22 from the powder material 24. Operation of the material deposition system 32 and the laser system 40 is coordinated, such as by computer control, to deposit and fuse the powder material 24 to define the product 22. Three-dimensional math data may be employed to build the product 22 according to design specifications or as individually needed to effect a repair. The laser source 44 and the controller may be located outside the build chamber enclosure 26.

The build platform 30 is configured for repositioning at various heights within the build chamber enclosure 26 during a build process. The actuator 48, which may be a cylinder, is coupled with the build platform 30 to effect vertical movement. Another actuator 50 is coupled with a piston 52 to move the powder material 24 from a cache reservoir for pickup by the recoater 38. Inside the build chamber enclosure 26, the powder material 24 is spread into the build area 28 on the build platform 30 one layer at a time. The beam deflection head 46 is selectively directed over the build area 28 for each of the individual layers of the deposited powder material 24 and applies the laser beam 42 to areas as necessary to define a segment of the product 22 from the applied layer. The build platform 30 is then lowered by the depth of one layer. The laser beam 42 is directed to traverse over that layer, and the process is repeated for successive layers until the product 22 is completely defined out of the powder material 24. The laser beam 42 selectively fuses the powder material 24 until the product 22 is completed, after which the un-sintered powder material 24 is removed and the 3-D product 22 is revealed.

To create the layers of the powder bed 34, the recoater 38 traverses across the build area 28 spreading the powder material 24 and then reverses direction rescanning across the build area 28 returning to its home position. For each traverse and rescan, the recoater picks up and carries a quantity of the powder material 24 out of the cache as determined by raising of the piston 52. If incomplete coverage of the build area 28 occurs, such as due to the quantity of powder material 24 being carried for the layer being used up before all gaps in the powder bed 34 are filled, a short-feed condition results. Short-feeding may result in inconsistent production and/or quality of the product 22, lost throughput of the product 22, and is therefore undesirable.

The additive manufacturing system 20 includes a gas source 39 that generates a gas flow stream 56 directed through a duct and a nozzle 36. The flow stream 56 exits the nozzle 36 toward the build area 28 from a face 54 of the nozzle 36. If the gas flow is not controlled through features of the nozzle 36 as described in more detail below, powder material 24 in the powder bed 34 may be blown and displaced, which may create gaps in coverage for a deposited layer. Refilling the gaps as the recoater 38 rescans exacerbates the likelihood that short-feed conditions may occur.

In an additional consideration, during sintering through application of the laser beam 42 to the powder bed 34, spatter may result. Spatter comprises particles 58 emitted from the melt pool created by the laser beam 42 during melting of the powder material 24. The particles 58 may oxidize or may have other changes in chemical composition and if they return to the powder bed 34, may affect the surface quality, porosity creation, and/or other characteristics of the product 22. Accordingly, concurrent with the control of the gas flow stream 56 to avoid creating gaps in powder coverage, the gas flow stream 56 is controlled to direct the particles 58 out of the build area 28. Accomplishing both goals simultaneously is achieved through features of the nozzle 36.

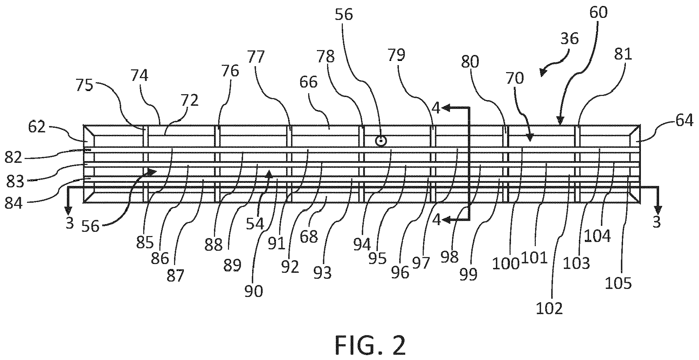

Referring to FIG. 2, the nozzle 36 is illustrated as viewed from the build area 28 looking at the face 54 of the nozzle 36. The nozzle 36 is configured to direct and control the gas flow stream 56 as it traverses through the build area 28 and over the powder bed 34 to achieve desired results. The nozzle 36 includes a perimeter wall 60 that includes side walls 62, 64, a top wall 66 and a bottom wall 68. The perimeter wall 60 defines a channel 70 that is divided into a number of sections defined by a series of internal members as further described below. The channel 70 includes an inlet 72 at the back of the nozzle 36 and an outlet 74 at the face 54 of the nozzle 36. The channel 70 channels the gas flow stream 56 toward the build area 28. The perimeter wall 60 diverges from the inlet 72 to the outlet 74, horizontally, vertically or in both directions. In other words, the cross sectional area of the channel 70 is larger at the outlet 74 than the cross sectional area of the channel 70 at the inlet 72. The larger cross sectional area results in a slower velocity of the gas flow stream 56 at the outlet 74 as compared to the inlet 72. The cross sectional area at the outlet 74 and the resulting velocity of the gas flow stream 56 is tailored to control of the gas flow stream 56 to avoid creating gaps in coverage of the powder bed 34 and to direct the particles 58 out of the build area 28. The nozzle 36 is tailored to accomplish the desired results with no other changes required to the additive manufacturing system 20.

A number of vanes 75-81 comprise a part of the aforementioned internal members, and are oriented vertically. The vanes 75-81 are distributed across the channel 70 between the side walls 62, 64. A number of guides 82-105 extend horizontally between adjacent pairs of the vanes 75-81, between the vane 75 and the side wall 62 and between the vane 81 and the side wall 64. The vanes 75-81 and the guides 82-105 divide the channel 70 into smaller sections to ensure a consistent level of control across the entire channel 70. In the current embodiment the internal members include seven vertical vanes and three rows of horizontal guides between the vanes. In other embodiments, another number of internal members may be used depending on the overall size of the nozzle 36.

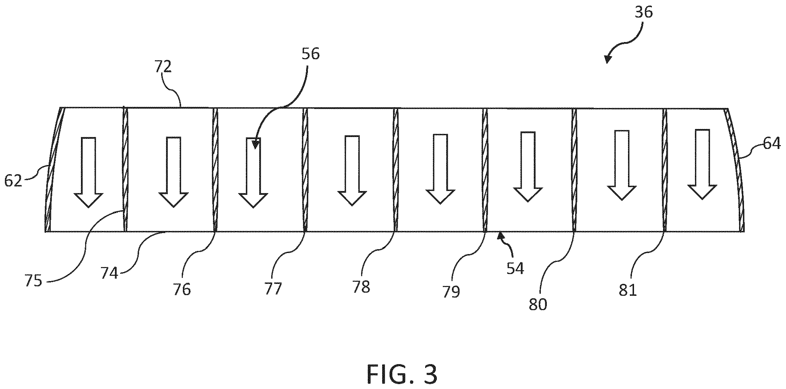

Referring to FIG. 3, a cross sectional view of the nozzle 36 shows that the vanes 75-81 each comprise an aerodynamic airfoil shape that is symmetric to reduce turbulence of the gas flow stream 56 in the build area 28. It has been found that turbulence may increase the likelihood of displacing the powder material 24 and is therefore undesirable. It may also be observed that the side walls 62, 64 diverge by tapering outward from the inlet 72 to the outlet 74, slowing the velocity of the gas flow stream 56. Each vane 75-81 is disposed vertically and in this embodiment all are parallel to each other straightening the gas flow stream 56.

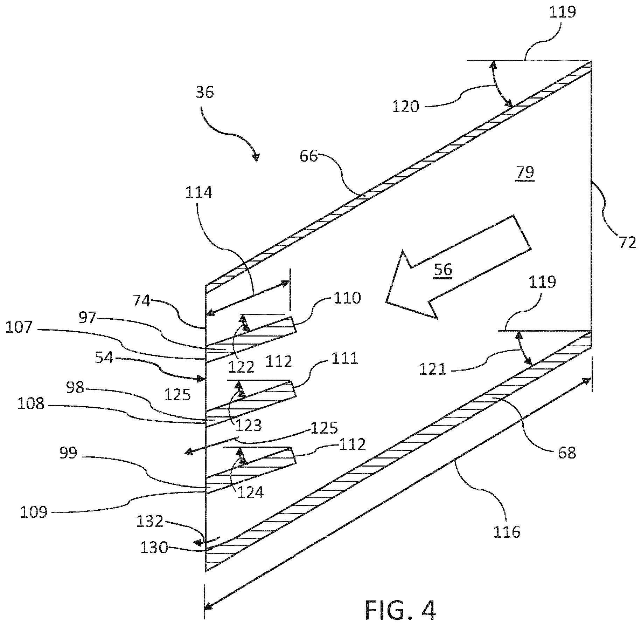

Referring to FIG. 4, a cross sectional view of the nozzle 36 shows that the guides 82-105 (as represented by the guides 97-99) extend only partially through the nozzle 36 in a direction from the inlet 72 to the outlet 74. Specifically, the guides 97-99 extend from the outlet 74 at the face 54 into the nozzle 36 and toward the inlet 72. The guides 97-99 have respective front ends 107-109 at the outlet 74 and respective back ends 110-111 inside the nozzle 36. The vanes 75-81, as represented by the vane 79, extend the entire distance 116 from the inlet 72 to the outlet 74. As a result, the distance 116 is equal to the length of each vane 75-81. The length 114 of the guides 97-99 from the front ends 107-109 to the back ends 110-112 is less than half the distance 116 from the inlet 72 to the outlet 74, and specifically is less than one-quarter of the distance 116. The length 114 of the guides 82-105 is relatively short so that the vanes 75-81 straighten the gas flow stream 56 prior to encountering the guides 82-105.

The top wall 66 and the bottom wall 68 are disposed at angles 120, 121 respectively, from horizontal 119 so that the outlet 74 is disposed lower than the inlet 72. This directs the gas flow stream 56 toward the top of the powder bed 34 to ensure an inert environment in the build area 28 where the laser beam 42 interacts with the powder bed 34. The guides 82-105, as represented by the guides 97-99, are disposed at angles 122-124 respectively, from horizontal 119, which are equal. The angles 122-124 are smaller in magnitude than the angles 120-121 and are tailored to tune the direction 125 of the gas flow stream 56 to the angles 122-124. The direction 125, as determined by the guides 82-105 sets the flow stream 56 at an optimal direction to achieve both gap avoidance in powder coverage and to direct the particles 58 out of the build area 28. The optimal angles 122-124 may be determined through modelling such as using computational fluid dynamics software and/or through testing.

The bottom wall 68 of the nozzle 36 includes a turning segment 130 at, and adjacent to, the outlet 74 at the face 54. The turning segment 130 comprises a portion of the bottom wall 68 which is otherwise straight. The length of the turning segment 130 is less than the length 114 of the guides 82-105. The turning segment 130 turns the bottom 132 of the gas flow stream 56 in a vertically upward direction to reduce interaction with the top of the powder bed 34. As a result, the bottom 132 of the gas flow stream 56 is slowed and turned upward to minimize movement of the powder material 24.

Through the embodiments disclosed herein additive manufacturing techniques such as laser powder bed fusion are carried out in a controlled gas flow environment. The gas flow is controlled through aerodynamic features to achieve desirable results. Turbulence is minimized and desired functionality of the gas flow system is maintained. Gas flow features avoid the occurrence of powder short-feeding, and as a result, throughput yield is increased. The controlled gas flow also effectively removes soot particles that might otherwise degrade the quality of the product being built.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for additive manufacturing using a powder bed with powder distributed on a build surface, the system comprising:
a nozzle configured to direct a flow stream of a gas over the powder bed, the nozzle including:
a perimeter wall defining a channel with an inlet and an outlet, the channel controlling the flow stream and the perimeter wall diverging from the inlet to the outlet;
a number of vanes distributed across the channel, the vanes configured as airfoils to reduce turbulence of the flow stream; and
a number of guides extending between adjacent vanes of the number of vanes, each guide disposed at an angle selected to direct the flow stream over the powder bed without displacing the powder in the powder bed.

2. The system of claim 1, wherein each vane in the number of vanes is disposed vertical and each guide in the number of guides is disposed generally horizontal.

3. The system of claim 1, wherein:
the perimeter wall includes a top wall disposed at a first angle relative to horizontal,
each guide is disposed at a second angle relative to the horizontal, the second angle tuned to direct the flow stream over the powder bed without creating gaps in the powder bed, and
the first angle is greater in magnitude than the second angle.

4. The system of claim 1, wherein:
the perimeter wall includes a bottom wall disposed at an angle relative to horizontal,
a turning segment is defined as a portion of the bottom wall at the outlet, and
the turning segment is curved and configured to turn a bottom part of the flow stream vertically upward to minimize interaction of the flow stream with the powder bed.

5. The system of claim 1, wherein the perimeter wall includes side walls, wherein the side walls angle outward from the inlet to the outlet so that the perimeter wall diverges horizontally from the inlet to the outlet to slow the flow stream.

6. The system of claim 1, wherein each vane in the number of vanes extends from the inlet to the outlet.

7. The system of claim 6, wherein each guide in the number of guides extends from the outlet into the nozzle and only partially through the nozzle.

8. The system of claim 7, wherein each guide has a first length and each vane has a second length, wherein the first length is less than one-half the second length in magnitude.

9. The system of claim 1, comprising a laser configured to direct energy onto the powder bed to fuse the powder together, wherein the laser is configured to interact with the powder resulting in emission of particles above the powder bed, wherein the nozzle is configured to direct the particles away from the powder bed.

10. The system of claim 1, wherein the perimeter wall includes a top wall and a bottom wall, wherein the top wall and the bottom wall are disposed at angles relative to horizontal so that the outlet is disposed lower than the inlet.
